# EUROPEAN PATENT APPLICATION

(11) **EP 4 510 224 A1**
(43) Date of publication of application: **19.02.2025**
(21) Application number: 23803009.2
(22) Date of filing: 11.05.2023
(51) Int. Cl.: H01M 4/36

(54) **CAVITY-CUSTOMIZED CARBON-SILICON COMPOSITE MATERIAL, AND PREPARATION METHOD THEREFOR AND USE THEREOF**

(30) Priority: 13.05.2022 CN 202210524051
(71) Applicant: SHAANXI EPUNO NEW ENERGY TECHNOLOGY CO., LTD, Xi'an, Shaanxi 713700 (CN)
(72) Inventor: QIN, Wang, Shaanxi 713700 (CN)
(74) Representative: Montemurro, Riccardo
(86) International application number: PCT/CN2023/093591
(87) International publication number: WO 2023/217240

(57) **Abstract**

Disclosed in the present application are a cavity-customized carbon-silicon composite material, and a preparation method therefor and the use thereof. The cavity-customized carbon-silicon composite material comprises a core structure and a third-phase carbon coating layer wrapping around the core structure, wherein the core structure is a structure formed after pore-forming agent particles are removed from first intermediate product particles; the core structure has a customized cavity formed after the pore-forming agent particles are removed; the first intermediate product particles are compound particles formed by silicon particles, the pore-forming agent particles, first-phase carbon and second-phase carbon; the first-phase carbon is a carbon nanomaterial with a network structure; the second-phase carbon is a carbon substance derived from an organic compound; and the third-phase carbon is a carbon substance converted from tar and/or asphalt. The cavity-customized carbon-silicon composite material of the present invention can buffer the volume expansion effect of silicon particles, has a more stable structure, and can maximize the volume capacity and the energy density, while effectively improving the cycling stability.

## Description

### TECHNICAL FIELD

The present disclosure relates to the technical field of lithium-ion battery negative electrode materials, and to a carbon-silicon composite material, a preparation method therefor and use thereof, and particularly to a cavity-customized carbon-silicon composite material (carbon-silicon composite material with customized cavities), a preparation method therefor and a use thereof.

### BACKGROUND ART

With extremely high charging-discharging specific capacity, silicon is a lithium-ion battery negative electrode active material which can replace graphite and have a great industrialization prospect. However, silicon is accompanied by a huge volume change during charging and discharging, and mechanical stress generated causes powdering of active material, structure collapse and detachment of material from current collector, thus resulting in rapid attenuation of capacity and reduction of cycle performance. In addition, due to such volume expansion effect, it is difficult for silicon to form a stable solid electrolyte interface film in an electrolytic solution, thus resulting in a decrease in charging and discharging efficiency and an accelerated deterioration of cycle performance. Silicon material is nanostructured and further combined with carbon (nano) material to construct a composite material, particularly, to construct a silicon-carbon core-shell composite structure containing cavities therein (for example, yolk-shell (Liu, N. et al. A pomegranate-inspired nanoscale design for large-volume-change lithium battery anodes. Nature Nanotechnology 2014, 9, 187)), so that the problem of instability of structure and surface and interface caused by the volume expansion effect of silicon during charging and discharging can be solved to a certain extent, and thus the charging and discharging cycle performance thereof is improved.

### SUMMARY

### TECHNICAL PROBLEMS

However, in most cases, existing compounding methods rely heavily on high contents of inactive auxiliary materials, and greatly reduced relative content of silicon and weight ratio capacity of materials. At the same time, the compounding methods often cannot realize uniform and accurate construction of intraparticle cavities. A general cavity template (such as silicon dioxide layer and silicon dioxide particle) either makes reserved cavities too large, sacrificing volumetric specific capacity and volumetric energy density, or makes reserved cavities too small, causing the volume effect to still exist and reducing cycle stability. In addition, in existing composite structures, cavity construction often causes silicon phase and carbon phase to be in an unstable "point" or inefficient "line" contact mode. Besides, preparation of such composite material relies on high-risk monosilane and like gaseous silicon sources, high-cost structured nano silicon, high-corrosive chemical reagents such as hydrofluoric acid, or harsh energy-consuming complex processes. To sum up, the material structure and the preparation method both seriously restrict performance and practical use of such materials.

### TECHNICAL SOLUTIONS

The present disclosure aims at providing a cavity-customized carbon-silicon composite material, a preparation method therefor and use thereof to overcome the above defects existing in the prior art. Through customized cavities and a gradient integrated three-phase coated carbon structure from "flexible" to "rigid" from inside to outside, not only the volume expansion effect of silicon particles can be buffered, but also the structure is more stable, and the cycle stability is effectively improved while maximizing volume capacity and energy density.

In order to achieve the above objective, technical solutions of the present disclosure are as follows.

In the first aspect, the present disclosure provides a cavity-customized carbon-silicon composite material, including a core structure and a third-phase carbon coating layer coating the core structure, wherein the core structure is a structure formed after pore-forming agent particles are removed from first intermediate product particles, the core structure has customized cavities formed after the pore-forming agent particles are removed, and the first intermediate product particles are compound particles formed by silicon particles, the pore-forming agent particles, first-phase carbon and second-phase carbon.

The first-phase carbon is a carbon nanomaterial with a network structure.

The second-phase carbon is a carbon substance of an organic compound.

The third-phase carbon is a carbon substance of tar and/or asphalt.

In the second aspect, the present disclosure provides a preparation method for the above cavity-customized carbon-silicon composite material, including processes as follows:
dispersing silicon particles, first-phase carbon, pore-forming agent particles and an organic compound in a solvent to render a precursor solution, wherein the pore-forming agent particles are salt substances soluble in water, and the first-phase carbon is a carbon nanomaterial with a network structure;
performing spray drying on the precursor solution to render precursor particles, wherein the precursor particles are mixture particles of the silicon particles, the first-phase carbon, the pore-forming agent particles and the organic compound;
performing a first heat treatment on the precursor particles in a non-oxidizing atmosphere, to derive the organic compound into a carbon substance, forming second-phase carbon, so as to render first intermediate product particles;
coating the first intermediate product particles with molten tar and/or asphalt, so as to render second intermediate product particles;
performing a second heat treatment on the second intermediate product particles in a non-oxidizing atmosphere, to convert the tar and/or the asphalt into a carbon substance, forming a third-phase carbon coating layer, so as to render third intermediate product particles; and
removing the pore-forming agent particles from the third intermediate product particles with water, so as to render the cavity-customized carbon-silicon composite material.

In the third aspect, the present disclosure provides use of the above cavity-customized carbon-silicon composite material or a cavity-customized carbon-silicon composite material prepared by the above preparation method in a negative electrode active material, a negative electrode, an electrochemical energy storage device or an electrochemical energy storage system.

### BENEFICIAL EFFECTS

By implementing the examples of the present disclosure, following beneficial effects will be obtained.
(1) According to the present disclosure, by using the pore-forming agent particles, precisely predetermined customized cavities can be formed. On one hand, the cavities can provide buffer space for expansion of silicon particles, and avoid problems of structure collapse and instability of surface and interface; on the other hand, by forming the customized cavities with the pore-forming agent, proper cavities can be customized according to the expansion volume of the silicon particles, thus avoiding too large or too small cavities, wherein too small cavities still have the risks of structure collapse and instability of surface and interface, and too large cavities will sacrifice the volumetric specific capacity and volumetric energy density.
(2) In the present disclosure, by using continuous three-phase carbon of different materials, and coating the silicon particles with the internally flexible carbon nanomaterial with a network structure, expansion tension of the silicon particles can be better absorbed, and structural stability can be maintained. An outermost coating layer generated after high-temperature carbonization of tar or asphalt has better heat resistance, acid and alkali resistance and impact resistance, so that the structure can be more stable. The carbon substance derived from the intermediate organic compound plays a role of a bridge linking the first-phase carbon and the third-phase carbon, so that the carbon structure is formed into a gradient integrated carbon structure from "flexible" to "rigid" from inside to outside, which not only provides continuous carbonaceous electron transport channels, but also makes the particle structure more stable, effectively improves the cycle stability while maximizing the volume capacity and energy density, thus being advantageous for its application as a negative electrode active material to a lithium-ion battery.

The carbon-silicon composite material of the present disclosure is quite suitable as a lithium-ion battery electrode active material constrained by volume expansion, and a silicon-based battery prepared has excellent charging-discharging volumetric specific capacity and cycle stability.

The preparation method of the present disclosure is not only low in cost, simple in process, safe and low in energy consumption, but also compatible with industrial equipment, and can realize large-scale production.

### BRIEF DESCRIPTION OF DRAWINGS

In order to more clearly illustrate technical solutions in examples of the present disclosure or in the prior art, drawings that need to be used in the description of the examples or the prior art will be introduced briefly below. Apparently, the drawings in the following description only show some examples of the present disclosure, and those ordinarily skilled in the art still could obtain other drawings according to these drawings, without using any inventive efforts.

In the drawings:
FIG. 1 is a structural schematic diagram of a cavity-customized carbon-silicon composite material according to a specific example of the present disclosure, wherein a partial enlarged structural diagram at an interface of a single particle in the cavity-customized carbon-silicon composite material is given.
FIG. 2 is a structural schematic diagram of a carbon-silicon composite material prepared in Comparative Example 1 or Comparative Example 2, wherein a partial enlarged structural diagram at an interface of a single particle in the carbon-silicon composite material is given.
FIG. 3 is a scanning electron microscopic picture of composite microparticles having undergone spray drying during preparation of a cavity-customized carbon-silicon composite material according to a specific example of the present disclosure.
FIG. 4 is a scanning electron microscopic picture of composite microparticles having undergone heat treatment during preparation of a cavity-customized carbon-silicon composite material according to a specific example of the present disclosure.
FIG. 5 is a low-power scanning electron microscopic picture of a cavity-customized carbon-silicon composite material prepared according to a specific example of the present disclosure.
FIG. 6 is a high-power scanning electron microscopic picture of a cavity-customized carbon-silicon composite material prepared according to a specific example of the present disclosure.
FIG. 7 is a scanning electron microscopic picture of composite microparticles having undergone a first heat treatment during preparation of a carbon-silicon composite material in Comparative Example 2.
FIG. 8 is a scanning electron microscopic picture of a carbon-silicon composite material prepared in Comparative Example 2.

### DETAILED DESCRIPTION OF EMBODIMENTS

Technical solutions in the examples of the present disclosure will be described clearly and completely below in conjunction with the drawings in the examples of the present disclosure. Apparently, the examples described are only some but not all examples of the present disclosure. Based on the examples in the present disclosure, all of other examples obtained by those ordinarily skilled in the art without using any inventive efforts shall fall within the scope of protection of the present disclosure.

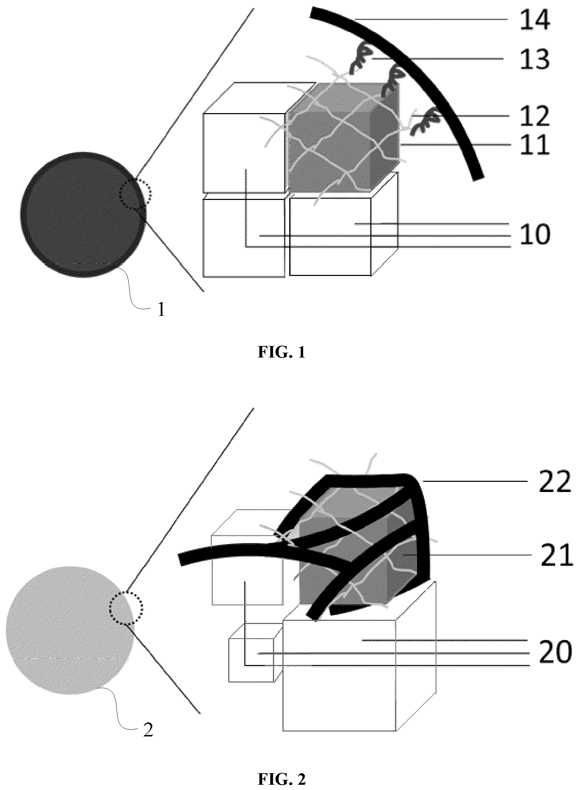

In the first aspect, the present disclosure discloses a cavity-customized carbon-silicon composite material, a structural schematic diagram thereof is as shown in FIG. 1. The drawing gives a partial enlarged structural diagram at an interface of a single particle in the cavity-customized carbon-silicon composite material, wherein 1 represents the cavity-customized carbon-silicon composite material, 10 represents a customized cavity, 11 represents a silicon particle, 12 represents first-phase carbon, 13 represents second-phase carbon, and 14 represents third-phase carbon. The cavity-customized carbon-silicon composite material of the present disclosure includes a core structure and a third-phase carbon coating layer coating the core structure, wherein the core structure is a structure formed after pore-forming agent particles are removed from first intermediate product particles, the core structure has customized cavities formed after the pore-forming agent particles are removed, and the first intermediate product particles are compound particles formed by silicon particles, the pore-forming agent particles, the first-phase carbon and the second-phase carbon; the first-phase carbon is a carbon nanomaterial with a network structure; the second-phase carbon is a carbon substance derived from an organic compound; and the third-phase carbon is a carbon substance coating layer converted from tar and/or asphalt.

In the present disclosure, the customized cavities can be uniformly and precisely predetermined and constructed by introducing the pore-forming agent particles according to volume expansion of the silicon particles (for example, the customized cavities in FIG. 1 can accommodate volume expansion of 300% of silicon).

In the above technical solution, by using the pore-forming agent particles, the precisely predetermined customized cavities can be formed. On one hand, the cavities can provide buffer space for expansion of the silicon particles, and avoid problems of structure collapse and surface and interface instability; on the other hand, by forming the customized cavities with the pore-forming agent, proper cavities can be customized according to the expansion volume of the silicon particles, thus avoiding too large or too small cavities, wherein too small cavities still have the risks of structure collapse and surface and interface instability, and too large cavities will sacrifice the volumetric specific capacity and volumetric energy density.

By using continuous three-phase carbon of different materials, and coating the silicon particles with the internally flexible carbon nanomaterial with a network structure, expansion tension of the silicon particles can be better absorbed, and structural stability can be maintained. An outermost coating layer generated after high-temperature carbonization of tar or asphalt has better heat resistance, acid and alkali resistance and impact resistance, so that the structure can be more stable. The carbon substance derived from the intermediate organic compound plays a role of a bridge linking the first-phase carbon and the third-phase carbon, so that the carbon structure coated on an outer layer is formed into a gradient integrated carbon structure from "flexible" to "rigid" from inside to outside, which not only provides continuous carbonaceous electron transport channels, but also makes the particle structure more stable, effectively improves the cycle stability while maximizing the volume capacity and energy density, thus being advantageous for its application as a negative electrode active material to a lithium-ion battery. In addition, the carbon-silicon composite material of the present disclosure is all composed of a silicon active material and a light-weight carbon material, without other auxiliary materials, so that a relative content of silicon and a weight ratio capacity of the materials can be improved as far as possible.

The carbon-silicon composite material of the present disclosure is quite suitable as a lithium-ion battery electrode active material constrained by volume expansion, and a silicon-based battery prepared has excellent charging-discharging volumetric specific capacity and cycle stability.

In a specific example, based on a total mass of the cavity-customized carbon-silicon composite material being 100%, a mass percentage of the silicon particles is 50%-99%, for example, 50%, 55%, 60%, 62.5%, 65%, 68%, 72%, 75%, 77%, 78%, 80%, 83%, 85%, 87.5%, 90%, 91%, 93%, 95%, 96.5%, 98% or 99%.

Based on the total mass of the cavity-customized carbon-silicon composite material being 100%, a mass percentage of the first-phase carbon is 0.1%-49%, a mass percentage of the second-phase carbon is 0.1%-49%, and a mass percentage of the third-phase carbon is 0.1%-49%.

In a specific example, the silicon particles include one or two or more of micron-sized silicon particles, nano-sized silicon particles, silicon nanowires and silicon nanotubes. The micron-sized silicon particles specifically may be micron-sized silicon of 1-20 µm, the nano-sized silicon particles may be nano-sized silicon particles of 1-1000 nm, the silicon nanowires may have a diameter of 1-1000 nm and a length of 10 nm-10 µm, and the silicon nanotubes may have a diameter of 1-1000 nm and a length of 10 nm-10 µm. The silicon particles may be silicon particles of different sizes. The silicon particles are not limited to the silicon particles listed above, and other silicon particles commonly used in the art may also be used in the present disclosure.

In a specific example, the carbon nanomaterial includes one or two or more of carbon nanotubes, graphene, graphene oxide, reduced graphene oxide, carbon nanofiber, bacterial cellulose-liked carbon fiber and bacterial cellulose-like carbon cilia.

The organic compound includes one or two or more of ascorbic acid, citric acid, glucose, sucrose, fructose, maltose, chitosan, urea, starch and protein. When a mixture of two or more is included, typical but non-limiting examples of mixtures include: mixture of ascorbic acid and sucrose, mixture of ascorbic acid and glucose, mixture of sucrose and citric acid, mixture of fructose, chitosan and urea, mixture of ascorbic acid, maltose and starch, mixture of ascorbic acid, sucrose, citric acid and protein, etc.

The tar includes coal tar and/or petroleum tar, and the asphalt includes coal tar pitch and/or petroleum asphalt. When a mixture of two or more is used, typical but non-limiting examples of combinations include: a combination of petroleum asphalt and petroleum tar, a combination of coal tar and petroleum asphalt, etc.

In the second aspect, the present disclosure further provides a preparation method for the above cavity-customized carbon-silicon composite material, including processes as follows.
1) Dispersing silicon particles, first-phase carbon, pore-forming agent particles and an organic compound in a solvent to render a precursor solution, wherein the pore-forming agent particles are salt substances soluble in water, and the first-phase carbon is a carbon nanomaterial with a network structure.

In the present step, as the first-phase carbon is a carbon nanomaterial with a network structure and has strong adsorbability, the silicon particles and the pore-forming agent particles are prone to combine with the first-phase carbon in solution. The organic compounds listed above are also used as dispersants in the present disclosure, so that the silicon particles, the first-phase carbon and the pore-forming agent particles are fully and uniformly dispersed in the solvent.

In a specific example, the solvent is water.

In a specific example, a mass percentage of the solvent in the precursor solution is 2%-99.9%.

In a specific example, the pore-forming agent particles are water-soluble salt substances with a melting point between 710 °C and 1000 °C. Specifically, the salt substances include one or two or more of sodium chloride (801 °C), potassium chloride (770 °C), calcium chloride (772 °C), magnesium chloride (714 °C), sodium carbonate (851 °C), potassium carbonate (891 °C), sodium sulfate (884 °C), etc., but are not limited to the listed in the above.

In a specific example, a volume ratio of the silicon particles to the pore-forming agent particles is 1:0.1-9, preferably 1:1-4.

2) Performing spray drying on the precursor solution to render precursor particles, wherein the precursor particles are mixture particles of the silicon particles, the first-phase carbon, the pore-forming agent particles and the organic compound.

In the present step, the spray drying is to atomize the precursor solution into droplets by any one of a pressure type atomizer, an airflow type atomizer, a rotary atomizer, an ultrasonic atomizer, etc., and then the droplets are dried so as to render the precursor particles.

In a specific example, a feed rate is 0.5-100 mL/min, for example, 0.5 mL/min, 1 mL/min, 5 mL/min, 10 mL/min, 20 mL/min, 30 mL/min, 35 mL/min, 40 mL/min, 47.5 mL/min, 50 mL/min, 60 mL/min, 70 mL/min, 77 mL/min, 80 mL/min, 90 mL/min and 100 mL/min, etc., an air inlet temperature is 100-300 °C, for example, 100 °C, 150 °C, 180 °C, 210 °C, 250 °C, 275 °C and 300 °C, etc., an air outlet temperature is automatically adjusted by a device, and a carrier gas is air.

3) Performing a first heat treatment on the precursor particles in a non-oxidizing atmosphere, to convert the organic compound into a carbon substance, forming second-phase carbon, so as to render first intermediate product particles.

A temperature of the first heat treatment is lower than the melting point of the pore-forming agent particles, so as to avoid melt loss of the pore-forming agent particles at high temperatures and failure of cavity customization. During heating, the organic compound melts, and is driven by expansion of heated air inside the particles to migrate to surfaces of the particles along gaps between embedded silicon particles and the pore-forming agent particles. As the temperature of the heat treatment is reached, the organic compound is denatured, cross-linked and/or carbonized, and is formed on the surfaces of the particles. The method of the present disclosure makes the second-phase carbon and the first-phase carbon linked by a covalent bond.

In a specific example, the temperature of the first heat treatment is 300-700 °C, for example, 300 °C, 350 °C, 400 °C, 425 °C, 500 °C, 575 °C, 650 °C, 700 °C, etc. A period of the first heat treatment is 1-24h, for example, 1h, 2h, 3h, 5h, 7h, 10h, 12h, 13h, 15h, 16h, 18h, 20h, 21h, 22h, 23h or 24h, etc.

4) Coating the first intermediate product particles with molten tar and/or asphalt, so as to render second intermediate product particles.

In the present step, as the surfaces of the first intermediate product particles are already formed with an organic compound-derived carbon layer, and the pore-forming agent particles are not removed at this time, the molten tar and/or asphalt will not penetrate into the interior of the particles, thus realizing a gradient structure from "flexible" to "rigid" from inside to outside in which the second-phase carbon is linked to the first-phase carbon and the third-phase carbon is linked to the second-phase carbon.

Preferably, the coating is performed in a non-oxidizing atmosphere, thus avoiding introduction of impurities.

In the present step, specifically, the first intermediate product particles can be dispersed in the molten tar and/or asphalt, and are stirred and mixed in a non-oxidizing atmosphere for 1-24h, for example, 1h, 2h, 3h, 5h, 7h, 10h, 12h, 13h, 15h, 16h, 18h, 20h, 21h, 22h, 23h or 24h, etc.

5) Performing a second heat treatment on the second intermediate product particles in a non-oxidizing atmosphere, to convert the tar and/or the asphalt into a carbon coating layer, forming a third-phase carbon coating layer, so as to render third intermediate product particles.

In the present step, a temperature of the second heat treatment is 600-1400 °C, for example, 600°C, 650 °C, 700 °C, 725 °C, 750°C, 760 °C, 780 °C, 800 °C, 850 °C, 880 °C, 900°C, 925 °C, 950 °C, 975 °C, 1050 °C, 1150 °C, 1200 °C, 1250 °C, 1300°C or 1400°C, etc. A period of the second heat treatment is 1-24h, for example, 1h, 2h, 3h, 5h, 7h, 10h, 12h, 13h, 15h, 16h, 18h, 20h, 21h, 22h, 23h or 24h, etc.

6) Removing the pore-forming agent particles from the third intermediate product particles with water, so as to render the cavity-customized carbon-silicon composite material.

In the present step, the third intermediate product particles can be washed with water, and dried to render the cavity-customized silicon-carbon composite material.

The non-oxidizing atmosphere in the above steps includes one or two or more of nitrogen atmosphere, argon atmosphere, hydrogen atmosphere and helium atmosphere, and when they are used in combination, typical but non-limiting examples of the combinations include: argon/hydrogen mixed atmosphere, helium/hydrogen mixed atmosphere, etc.

The above preparation method of the present disclosure is not only low in cost, simple in process, safe and low in energy consumption, but also compatible with industrial equipment, and can realize large-scale production.

In the third aspect, the present disclosure further provides use of the above cavity-customized carbon-silicon composite material or a cavity-customized carbon-silicon composite material prepared by the above preparation method in a negative electrode active material, a negative electrode, an electrochemical energy storage device or an electrochemical energy storage system.

When the cavity-customized carbon-silicon composite material is applied to the negative electrode active material, the cavity-customized carbon-silicon composite material can be used alone as a negative electrode active material, or can also be used in mixture with other negative electrode active materials. When it is used in mixture with other negative electrode active materials, an amount of the cavity-customized carbon-silicon composite material is not less than 1% of a total mass of total negative electrode active materials.

The "other negative electrode active materials" above include artificial graphite, natural graphite, single-walled carbon nanotubes, few-layer carbon nanotubes, multi-walled carbon nanotubes, graphene, reduced oxidized graphene, hard carbon materials, metals capable of having an alloying reaction with lithium and precursors thereof (tin, germanium, aluminum, cobalt, etc.), transition metal compounds capable of having conversion reaction with lithium (iron oxide, etc.) and lithium-embedded transition metal oxides (lithium titanate, etc.).

The negative electrode active materials may be lithium-ion battery negative electrode active materials.

When the cavity-customized carbon-silicon composite material is applied to a negative electrode, the negative electrode includes the above cavity-customized carbon-silicon composite material as a negative electrode active material, and the negative electrode can be, for example, a lithium-ion battery negative electrode.

When the cavity-customized carbon-silicon composite material is applied to an electrochemical energy storage device or an electrochemical energy storage system, the electrochemical energy storage device or the electrochemical energy storage system includes the above cavity-customized carbon-silicon composite material.

The "electrochemical energy storage device or electrochemical energy storage system" in the present disclosure may be, for example, a lithium-ion battery and a capacitor.

Specific examples are as follows.

### Example 1

### Preparation of cavity-customized carbon-silicon composite material:

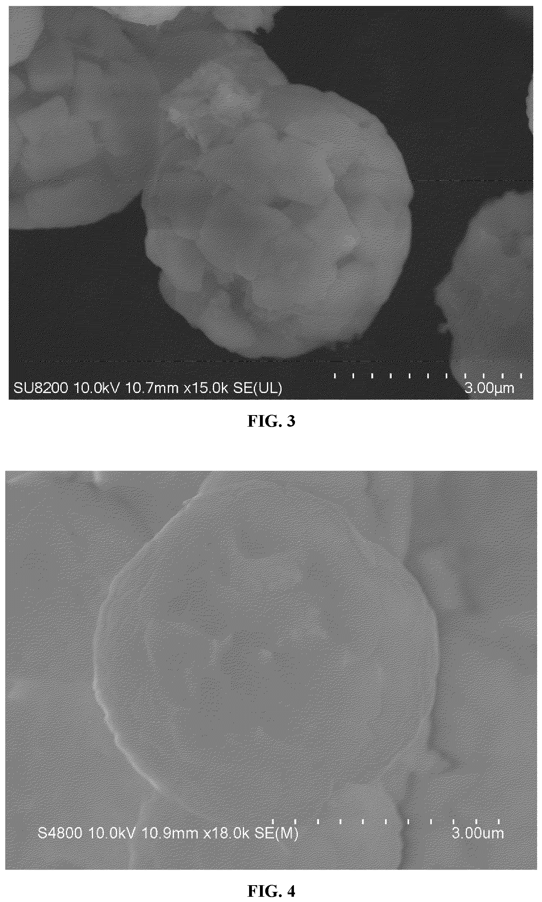

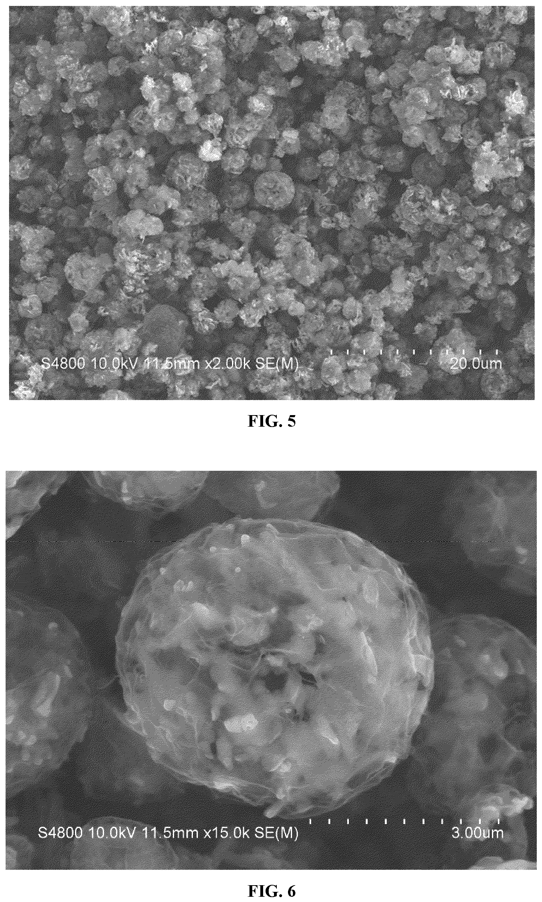

Silicon particles of 1-3 µm was stirred and mixed with an aqueous solution of sodium chloride, carbon nanotubes and ascorbic acid at appropriate concentration (mass ratio: 1:3:0.05:0.3), as a precursor solution of spray drying. Solute concentration in the precursor solution was 15 wt%. During the spray drying, a feed rate was 20 mL/min, an air inlet temperature was 220 °C, an air outlet temperature was 110 °C, and a carrier gas was air. Resulting powder (FIG. 3) was subjected to heat treatment at 550 °C in a nitrogen atmosphere for 2 h, to render carbon-silicon composite microparticles with second-phase carbon converted from ascorbic acid on surfaces (FIG. 4). The microparticles were dispersed in molten petroleum asphalt (mass ratio: 1:0.1), and resultant was stirred in a modification mixer in a nitrogen atmosphere for 6h, further program heated to 250 °C, 550 °C and 850 °C in sequence in a nitrogen atmosphere and maintained at each temperature for 2h, then cooled to a room temperature, and washed with deionized water and dried, to render the cavity-customized carbon-silicon composite material. The resulting cavity-customized carbon-silicon composite material had a particle size of about 5 µm, and results are as shown in FIG. 5 and FIG. 6, wherein based on a total mass of the cavity-customized carbon-silicon composite material, a mass percentage of silicon was 99%.

### Preparation of negative electrode:

The cavity-customized carbon-silicon composite material in the present example was used as a negative electrode active material. The negative electrode active material, a binder polyvinylidene difluoride (PVDF), and a conductive agent acetylene black were uniformly mixed in N-methylpyrrolidone (NMP) to formulate a slurry, which was then coated on a copper-foil current collector, and dried in vacuum at 120 °C for 12h, and the dried copper-foil current collector was rolled to render a negative electrode sheet.

### Preparation of battery:

The negative electrode sheet as test electrode, a metal lithium foil as counter electrode, 1M LiPF6/EC: DEC (1: 1; v/v), i.e., mixed solution of ethylene carbonate and diethyl carbonate dissolved with lithium hexafluorophosphate, with FEC added as electrolytic solution, and Celgard 2400 as separator, were assembled into a button type lithium-ion battery in a glove box with contents of oxygen and water both being less than 1 ppm.

### Test results of battery performances:

At a current density of 0.5C, the button type lithium-ion battery has a specific capacity of up to 2150 mAh/cm³, and can be stably cycled for 550 times.

### Example 2

### Preparation of cavity-customized carbon-silicon composite material:

Silicon of 3-5 µm was stirred and mixed with an aqueous solution of sodium sulfate, graphene oxide and glucose at appropriate concentration (mass ratio was 1:0.15:0.001:0.5), as a precursor solution of spray drying. Solute concentration in the precursor solution was 85 wt%. During the spray drying, a feed rate was 0.5 mL/min, an air inlet temperature was 100 °C, an air outlet temperature was 80 °C, and a carrier gas was air. Resulting powder was subjected to heat treatment at 300 °C in a hydrogen atmosphere for 24h, to render carbon-silicon composite microparticles with second-phase carbon converted from glucose on surfaces. The microparticles were dispersed in a mixture of molten coal tar pitch and petroleum asphalt (mass ratio was 1:0.1:0.2), and resultant was stirred in a modification mixer in a nitrogen atmosphere for 24 h, further program heated to 250 °C, 550 °C and 600 °C in sequence in a hydrogen atmosphere and maintained at those temperatures for 2h, 2h, and 24h respectively, then cooled to a room temperature, and washed with deionized water and dried, to render the cavity-customized carbon-silicon composite material. The resulting cavity-customized carbon-silicon composite material had a particle size of about 8 µm, wherein based on a total mass of the cavity-customized carbon-silicon composite material, a mass percentage of silicon particles was 87%.

A negative electrode was prepared with the cavity-customized carbon-silicon composite material of the present example as a negative electrode active material, and further assembled to obtain a battery. Methods and conditions for preparing the negative electrode and the battery were the same as those in Example 1.

### Test results of battery performances:

At a current density of 0.5C, the button type lithium-ion battery has a specific capacity of up to 1875 mAh/cm³, and can be stably cycled for 465 times.

### Example 3

### Preparation of cavity-customized carbon-silicon composite material:

Silicon of 1-3 µm was stirred and mixed with an aqueous solution of potassium carbonate, reduced oxidized graphene and starch at appropriate concentration (mass ratio was 1:4:0.2:0.5), as a precursor solution of spray drying. Solute concentration in the precursor solution was 0.1 wt%. During the spray drying, a feed rate was 100 mL/min, an air inlet temperature was 300 °C, an air outlet temperature was 160 °C, and a carrier gas was air. Resulting powder was subjected to heat treatment at 475 °C in an argon/hydrogen atmosphere for 10h, to render carbon-silicon composite microparticles with second-phase carbon converted from starch on surfaces. The microparticles were dispersed in petroleum tar (mass ratio was 1:2), and resultant was stirred in a modification mixer in a nitrogen/argon atmosphere for 1h, further program heated to 250 °C, 550 °C and 1400 °C in sequence in an argon/hydrogen atmosphere and maintained at those temperatures for 2h, 2h, and 1h, respectively, then cooled to a room temperature, and washed with deionized water and dried, to render the cavity-customized carbon-silicon composite material. The resulting cavity-customized carbon-silicon composite material had a particle size of about 4 µm, wherein based on a total mass of the cavity-customized carbon-silicon composite material, a mass percentage of silicon particles was 50%.

A negative electrode was prepared with the cavity-customized carbon-silicon composite material of the present example as a negative electrode active material, and further assembled to obtain a battery. Methods and conditions for preparing the negative electrode and the battery were the same as those in Example 1.

### Test results of battery performances:

At a current density of 0.5C, the button type lithium-ion battery has a specific capacity of up to 1560 mAh/cm³, and can be stably cycled for 510 times.

### Example 4

### Preparation of cavity-customized carbon-silicon composite material:

Silicon of 3-5 µm was stirred and mixed with an aqueous solution of potassium chloride/sodium chloride, carbon nanotubes, urea and protein at appropriate concentration (mass ratio was 1:0.1:0.1:0.25:0.3:0.2), as a precursor solution of spray drying. Solute concentration in the precursor solution was 35 wt%. During the spray drying, a feed rate was 10 mL/min, an air inlet temperature was 275 °C, an air outlet temperature was 140 °C, and a carrier gas was air. Resulting powder was subjected to heat treatment at 700 °C in a nitrogen atmosphere for 1h, to render carbon-silicon composite microparticles with second-phase carbon converted from urea and protein on surfaces. Sealed microparticles were dispersed in coal tar (mass ratio was 1:0.65), and resultant was stirred in a modification mixer in an argon atmosphere for 12h, further program heated to 250 °C, 550 °C and 1050 °C in sequence in an argon atmosphere and maintained at those temperatures for 2h, 2h, and 6h, respectively, then cooled to a room temperature, and washed with deionized water and dried, to render the cavity-customized carbon-silicon composite material. The resulting cavity-customized carbon-silicon composite material had a particle size of about 10 µm, wherein based on a total mass of the cavity-customized carbon-silicon composite material, a mass percentage of silicon particles was 75%.

A negative electrode was prepared with the cavity-customized carbon-silicon composite material of the present example as a negative electrode active material, and further assembled to obtain a battery. Methods and conditions for preparing the negative electrode and the battery were the same as those in Example 1.

### Test results of battery performances:

At a current density of 0.5C, button type lithium-ion battery has a specific capacity of up to 1750 mAh/cm³, and can be stably cycled for 460 times.

### Example 5

### Preparation of cavity-customized carbon-silicon composite material:

Silicon nanowires with a diameter of about 100 nm were stirred and mixed with an aqueous solution of calcium chloride/sodium carbonate, carbon nanotubes, graphene oxide, ascorbic acid and citric acid at appropriate concentration (mass ratio was 1:4:2:0.5:0.2:0.1:0.2), as a precursor solution of spray drying. Solute concentration in the precursor solution was 55 wt%. During the spray drying, a feed rate was 5 mL/min, an air inlet temperature was 165 °C, an air outlet temperature was 100 °C, and a carrier gas was air. Resulting powder was subjected to heat treatment at 650 °C in an argon atmosphere for 4h, to render carbon-silicon composite microparticles sealed with carbon converted from ascorbic acid and citric acid. The sealed microparticles were dispersed in molten coal tar pitch (mass ratio was 1: 1), and resultant was stirred in a modification mixer in a nitrogen atmosphere for 18h, further program heated to 250 °C, 550 °C and 750 °C in sequence in a hydrogen atmosphere and maintained at those temperatures for 2h, 2h, and 15h, respectively, then cooled to a room temperature, and washed with deionized water and dried, to render the cavity-customized carbon-silicon composite material. The resulting cavity-customized carbon-silicon composite material had a particle size of about 7 µm, wherein based on a total mass of the cavity-customized carbon-silicon composite material, a mass percentage of silicon particles was 65%.

A negative electrode was prepared with the cavity-customized carbon-silicon composite material of the present example as a negative electrode active material, and further assembled to obtain a battery. Methods and conditions for preparing the negative electrode and the battery were the same as those in Example 1.

### Test results of battery performances:

At a current density of 0.5C, the button type lithium-ion battery has a specific capacity of up to 1680 mAh/cm³, and can be stably cycled for 480 times.

### Example 6

### Preparation of cavity-customized carbon-silicon composite material:

Silicon nanoparticles of 50 nm were stirred and mixed with an aqueous solution of sodium chloride, carbon nanotubes and ascorbic acid at appropriate concentration (mass ratio was 1:2:0.5:0.5), as a precursor solution of spray drying. Solute concentration in the precursor solution was 2 wt%. During the spray drying, a feed rate was 65 mL/min, an air inlet temperature was 255 °C, an air outlet temperature was 120 °C, and a carrier gas was air. Resulting powder was subjected to heat treatment at 420 °C in an argon/nitrogen atmosphere for 16h, to render carbon-silicon composite microparticles with second-phase carbon converted from glucose on surfaces. Sealed microparticles were dispersed in molten petroleum asphalt (mass ratio was 1:0.15), and resultant was stirred in a modification mixer in a nitrogen atmosphere for 3h, further program heated to 250 °C, 550 °C and 1200 °C in sequence in a hydrogen atmosphere and maintained at those temperatures for 2h, 2h, and 4h, respectively, then cooled to a room temperature, and washed with deionized water and dried, to render the cavity-customized carbon-silicon composite material. The resulting cavity-customized carbon-silicon composite material had a particle size of about 6 µm, wherein based on a total mass of the cavity-customized carbon-silicon composite material, a mass percentage of silicon particles was 95%.

A negative electrode was prepared with the cavity-customized carbon-silicon composite material of the present example as a negative electrode active material, and further assembled to obtain a battery. Methods and conditions for preparing the negative electrode and the battery were the same as those in Example 1.

### Test results of battery performances:

At a current density of 0.5C, the button type lithium-ion battery has a specific capacity of up to 2050 mAh/cm³, and can be stably cycled for 525 times.

### Comparative Example 1

Compared with Example 1, Comparative Example 1 did not use the pore-forming agent particles, specifically as follows:
Silicon of 1-3 µm was stirred and mixed with an aqueous solution of carbon nanotubes and ascorbic acid at appropriate concentration, as a precursor solution of spray drying (mass ratio was 1:0.05:0.3). Solute concentration in the precursor solution was 15 wt%. During the spray drying, a feed rate was 10 mL/min, an air inlet temperature was 220 °C, an air outlet temperature was 110 °C, and a carrier gas was air. Resulting powder was subjected to heat treatment at 550 °C in a nitrogen atmosphere for 2 h, to render porous carbon-silicon composite microparticles. The porous microparticles were dispersed in molten petroleum asphalt (mass ratio was 1:0.1), and resultant was stirred in a modification mixer in a nitrogen atmosphere for 6h, further program heated to 250 °C, 550 °C and 850 °C in sequence in a nitrogen atmosphere and maintained at each temperature for 2h, then cooled to a room temperature, and washed with deionized water and dried, to render a cavity-non-customized carbon-silicon composite material. The resulting non-customized carbon-silicon composite material had a particle size of about 3.5 µm, wherein based on a total mass of the carbon-silicon composite material, a mass percentage of silicon particles was 92%.

See FIG. 2 for a structural schematic diagram of the carbon-silicon composite material of the present comparative example, and a partial enlarged structural diagram at an interface of a single particle in the carbon-silicon composite material is given in the drawing, where 2 represents the carbon-silicon composite material, 20 represents a non-customized pore, 21 represents silicon, and 22 represents carbon. It can be seen from the drawing that, firstly, porous microparticles are formed under condition of no pore-forming agent, and pores therein are random, which cannot provide necessary space for volume expansion of silicon particles; secondly, an open pore structure of the porous microparticles causes permeation of the third-phase carbon from outside to inside during carbon coating, and a non-gradient integrated carbon structure inside and outside particles is formed and directly coated on silicon surfaces. This not only hinders and even limits pore space from accommodating the volume expansion of the silicon particles, but also constitutes an unstable fully "rigid" conductive network, which is prone to crack and fall off along with the volume expansion of the silicon particles during the charging and discharging.

A negative electrode was prepared with the carbon-silicon composite material of the present comparative example as a negative electrode active material, and further assembled to obtain a battery. Methods and conditions for preparing the negative electrode and the battery were the same as those in Example 1.

### Test results of battery performances:

At a current density of 0.5C, the battery has a specific capacity of 1350 mAh/cm³, but can only be cycled for 35 times.

### Comparative Example 2

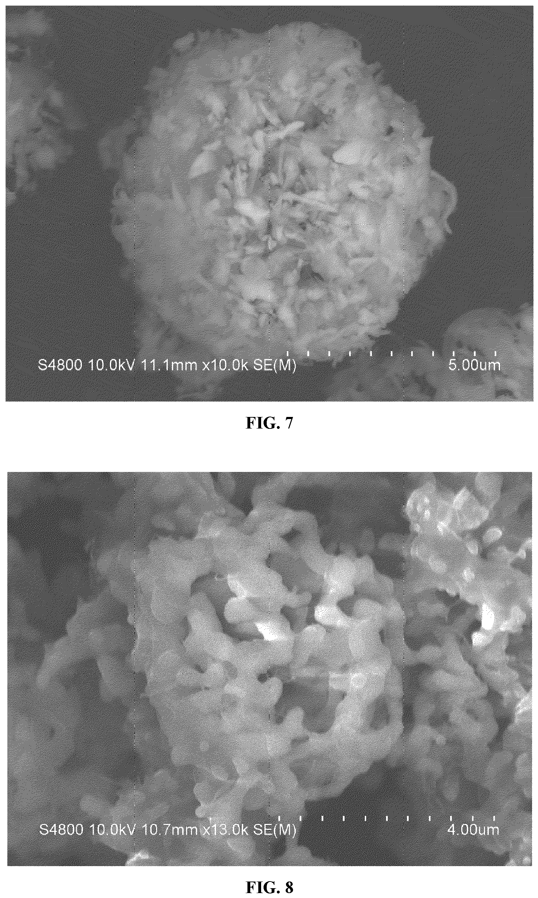

Silicon of 1-3 µm was stirred and mixed with an aqueous solution of sodium chloride, carbon nanotubes and ascorbic acid at appropriate concentration (the same as in Example 1), as a precursor solution of spray drying. Solute concentration in the precursor solution was 15 wt%. During the spray drying, a feed rate was 20 mL/min, an air inlet temperature was 220 °C, an air outlet temperature was 110 °C, and a carrier gas was air. Resulting powder was subjected to heat treatment at 850 °C in a nitrogen atmosphere for 2 h, to render porous carbon-silicon composite microparticles (FIG. 7). The microparticles were dispersed in molten petroleum asphalt, and resultant was stirred in a modification mixer in a nitrogen atmosphere for 6h, further program heated to 250 °C, 550 °C and 850 °C in sequence in a nitrogen atmosphere and maintained at each temperature for 2h, then cooled to a room temperature, and washed with deionized water and dried, to render the cavity-non-customized carbon-silicon composite material (FIG. 8). The resulting carbon-silicon composite material had a particle size of about 4 µm, wherein based on a total mass of the carbon-silicon composite material, a mass percentage of silicon particles was 95%.

See FIG. 2 for a structural schematic diagram of the carbon-silicon composite material of the present comparative example, and a partial enlarged structural diagram at an interface of a single particle in the carbon-silicon composite material is given in the drawing, where 2 represents the carbon-silicon composite material, 20 represents a non-customized pore, 21 represents silicon, and 22 represents carbon. It can be seen from the drawing that, firstly, pores inside the microparticles are random, and cannot provide accurate and necessary space for volume expansion of the silicon particles, which is mainly caused by the fact that a heat treatment temperature during the preparation exceeds the melting point of the pore-forming agent, so that the pore-forming agent is lost and cavity customization fails; secondly, the loss of the pore-forming agent makes the heat-treated microparticles have open pores (see FIG. 7), which allows permeation of the third-phase carbon from outside to inside during coating, thus forming a non-gradient integrated carbon structure directly coated on silicon surfaces. This not only hinders and even limits pore space from accommodating the volume expansion of the silicon particles, but also constitutes an unstable fully "rigid" conductive network, which is prone to crack and fall off along with the volume expansion of the silicon particles during the charging and discharging.

A negative electrode was prepared with the carbon-silicon composite material of the present comparative example as a negative electrode active material, and further assembled to obtain a battery. Methods and conditions for preparing the negative electrode and the battery were the same as those in Example 1.

### Test results of battery performances:

At a current density of 0.5C, the battery has a specific capacity of 1430 mAh/cm³, but can only be cycled for 57 times.

The above examples merely describe several embodiments of the present disclosure, of which the description is relatively specific and detailed, but they should not be thus construed as limitation to the patent scope of the present disclosure. It should be indicated that those ordinarily skilled in the art further could make several modifications and improvements without departing from the concept of the present disclosure, all of which fall within the scope of protection of the present disclosure. Therefore, the scope of protection of the present patent for invention should be based on the claims attached.

## Claims

1. A cavity-customized carbon-silicon composite material, **characterized by** comprising a core structure and a third-phase carbon coating layer coating the core structure, wherein the core structure is a structure formed after pore-forming agent particles are removed from first intermediate product particles, the core structure has customized cavities formed after the pore-forming agent particles are removed, and the first intermediate product particles are compound particles formed by silicon particles, the pore-forming agent particles, first-phase carbon and second-phase carbon;
the first-phase carbon is a carbon nanomaterial with a network structure;
the second-phase carbon is a carbon substance of an organic compound; and
the third-phase carbon is a carbon substance of tar and/or asphalt.

2. The cavity-customized carbon-silicon composite material according to claim **1,** wherein based on a total mass of the cavity-customized carbon-silicon composite material being 100%, a mass percentage of the silicon particles is 50%-99%.

3. The cavity-customized carbon-silicon composite material according to claim 2, wherein based on the total mass of the cavity-customized carbon-silicon composite material being 100%, a mass percentage of the first-phase carbon is 0.1%-49%, a mass percentage of the second-phase carbon is 0.1%-49%, and a mass percentage of the third-phase carbon is 0.1%-49%.

4. The cavity-customized carbon-silicon composite material according to any one of claims 1-3, wherein the silicon particles comprise one or two or more of micron-sized silicon particles, nano-sized silicon particles, silicon nanowires and silicon nanotubes;
the carbon nanomaterial comprises one or two or more of carbon nanotubes, graphene, graphene oxide, reduced graphene oxide, carbon nanofiber, bacterial cellulose-like carbon fiber and bacterial cellulose-like carbon cilia;
the organic compound comprises one or two or more of ascorbic acid, citric acid, glucose, sucrose, fructose, maltose, chitosan, urea, starch and protein;
the tar comprises coal tar and/or petroleum tar; and
the asphalt comprises coal tar pitch and/or petroleum asphalt.

5. A preparation method for a cavity-customized carbon-silicon composite material, **characterized by** comprising processes of:
dispersing silicon particles, first-phase carbon, pore-forming agent particles and an organic compound in a solvent to render a precursor solution, wherein the pore-forming agent particles are salt substances soluble in water, and the first-phase carbon is a carbon nanomaterial with a network structure;
performing spray drying on the precursor solution to render precursor particles, wherein the precursor particles are mixture particles of the silicon particles, the first-phase carbon, the pore-forming agent particles and the organic compound;
performing a first heat treatment on the precursor particles in a non-oxidizing atmosphere, to convert the organic compound into a carbon substance, forming second-phase carbon, so as to render first intermediate product particles;
coating the first intermediate product particles with molten tar and/or asphalt, so as to render second intermediate product particles;
performing a second heat treatment on the second intermediate product particles in a non-oxidizing atmosphere, to convert the tar and/or the asphalt into a carbon substance, forming a third-phase carbon coating layer, so as to render third intermediate product particles; and
removing the pore-forming agent particles from the third intermediate product particles with water, so as to render the cavity-customized carbon-silicon composite material.

6. The preparation method for a cavity-customized carbon-silicon composite material according to claim 5, wherein a volume ratio of the silicon particles to the pore-forming agent particles is 1:0.1-9.

7. The preparation method for a cavity-customized carbon-silicon composite material according to claim 5, wherein a feed rate of the spray drying is 0.5-100 mL/min, and an air inlet temperature is 100-300 °C;
a temperature of the first heat treatment is 300-700 °C;
a period of the first heat treatment is 1-24h;
a temperature of the second heat treatment is 600-1400 °C; and
a period of the second heat treatment is 1-24h.

8. The preparation method for a cavity-customized carbon-silicon composite material according to claim 5, wherein the non-oxidizing atmosphere comprises one or two or more of nitrogen atmosphere, argon atmosphere, hydrogen atmosphere and helium atmosphere; and
the salt substances comprise one or two or more of sodium chloride, potassium chloride, calcium chloride, magnesium chloride, sodium carbonate, potassium carbonate and sodium sulfate.

9. The preparation method for a cavity-customized carbon-silicon composite material according to claim 5, wherein the solvent comprises water; and
a mass percentage of the solvent in the precursor solution is 2%-99.9%.

10. Use of the cavity-customized carbon-silicon composite material according to any one of claims 1-4 or a cavity-customized carbon-silicon composite material prepared by the preparation method according to any one of claims 5-9 in a negative electrode active material, a negative electrode, an electrochemical energy storage device or an electrochemical energy storage system.
